# EUROPÄISCHE PATENTSCHRIFT

(11) **EP 0 745 650 B1**
(45) Veröffentlichungstag und Bekanntmachung des Hinweises auf die Patenterteilung: **01.09.1999**
(21) Anmeldenummer: 96107968.8
(22) Anmeldetag: 20.05.1996
(51) Int. Cl.: C09B 62/513, C09B 67/24

(54) **Polyfunktionelle Azoreaktivfarbstoffe**
Polyfunctional azo reactive dyes
Colorants azoiques réactifs polyfonctionnels

(30) Priorität: 31.05.1995 DE 19519823
(43) Veröffentlichungstag der Anmeldung: 04.12.1996
(73) Patentinhaber: BAYER AG, 51368 Leverkusen (DE)
(72) Erfinder: Jäger, Horst, Dr., 51375 Leverkusen (DE); Stöhr, Frank-Michael, Dr., 51519 Odenthal (DE)

(56) Entgegenhaltungen:
- CH-A- 540 963
- DE-C- 965 902
- GB-A- 2 007 698

## Beschreibung

Die Erfindung betrifft neue polyfunktionelle Azoreaktivfarbstoffe, ihre Herstellung und Verwendung.

Polyfunktionelle Reaktivfarbstoffe, auch solche mit wenigstens zwei Azogruppen, sind bereits bekannt, siehe DE-A 2 515 137 (US-A-4 069 218) DE-A 2 748 929, DE-A 2 748 966 (GB-A-2 007 698), DE-A 2 748 965 (US-A-4 485 041) und DE-A 4 113 838 (US-A-5 200 511).

Die bekannten Farbstoffe weisen aber noch Nachteile hinsichtlich ihrer anwendungstechnischen Eigenschaften auf.

Aus DE-C 965 902 und CH-A 540963 sind Disazofarbstoffe bekannt, die Kupplungskomponenten aus der Reihe der aminobenzol-Reihe aufweisen, und deren Azosysteme über eine Acylbrücke miteinander verbunden sind.

Die vorliegende Erfindung betrifft Azoreaktivfarbstoffe der Formel

D¹-N=N-K¹-Y-K²-N=N-D² (1)

worin
- Y: für einen bifunktionellen Acylrest der aliphatischen oder aromatischen Reihe steht, z.B.: 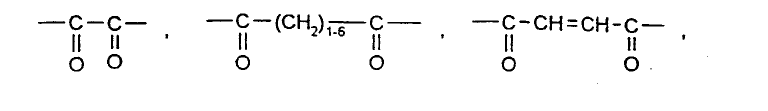 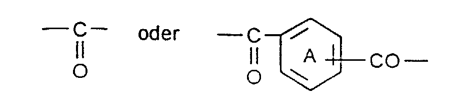 worin die beiden Carbonylgruppen des Benzolringes A in o-, m- oder p-Stellung zueinander stehen und der Benzolring A durch Cl, CH₃ oder OCH₃ substituiert sein kann;
- K¹ und K²: gleich oder verschieden sind und für den Rest einer Kupplungskomponente der Aminonaphthalin- oder der Aminohydroxynaphthalin- Reihe stehen;
- D¹ und D²: gleich oder verschieden sind und für den Rest einer Diazokomponente der Formel

X SO₂-B-D- (2)

stehen
worin
D einen gegebenenfalls substituierten Benzol- oder Naphthalinkern bedeutet,
B für eine direkte Bindung oder ein zweiwertiges Brückenglied und
X für CH = CH₂ oder CH₂CH₂Z steht, wobei
Z einen unter alkalischen Bedingungen abspaltbaren Substituenten bedeutet.

Beispiele für Substituenten von D sind:
C₁-C₄-Alkyl, insbesondere CH₃, gegebenenfalls substituiertes C₁-C₄-Alkoxy, gegebenenfalls substituiertes NH₂, COOH, SO₃H, OH, Halogen, insbesondere Cl, SCH₂CH₂OH, SCH₂COOH

Beispiele für Substituenten der Alkoxygruppen im Rest D sind:
COOH, OH, SO₃H, OSO₃H, OCH₃, OC₂H₅, OCH₂CH₂OH

Beispiele für Substituenten der Aminogruppe im Rest D sind:
CH₃, C₂H₅, C₂H₄OH, CH₂CH₂SO₃H, CH₂COOH, CH₂CH₂COOH, CH₂CH₂NHCOCH₂CH₂COOH, CH₂CH₂SO₂CH₂CH₂OSO₃H, CH₂CH₂CH₂SO₂CH₂CH₂OSO₃H, CH₂CH₂OSO₃H oder Phenylreste, die gegebenenfalls durch C₁-C₄-Alkyl, C₁-C₄-Alkoxy, SO₃H, COOH und/oder SO₂CH₂CH₂OSO₃H substituiert sind; weitere Beispiele für die substituierte Aminogruppe sind die Glieder zur Vervollständigung eines Ringes, insbesondere zur Vervollständigung eines Morpholin-, Cyclohexylamin- oder Cyclopentylaminringes.

Beispiele für zweiwertige Brückenglieder B sind:

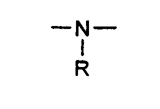

-CH₂-,

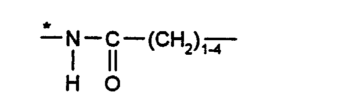

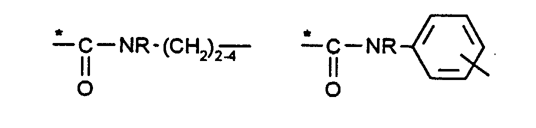

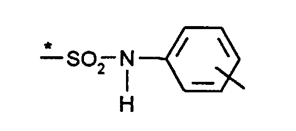

wobei die mit einem Stern gekennzeichnete Bindung an den Rest D geknüpft ist und
- R: für H oder C₁-C₄-Alkyl, insbesondere CH₃ und C₂H₅ steht.

Beispiele für Z sind:
OSO₃H, S₂O₃H, OPO₃H₂, Cl, OCOCH₃, OSO₂CH₃

Beispiele für Kupplungskomponenten der Aminonaphthalinreihe in der Bedeutung von K¹ und K² sind: 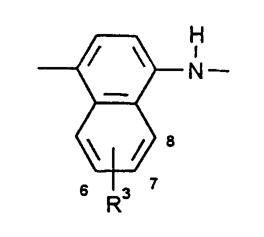 wobei
- R³: = H oder SO₃H und in 6-, 7- oder 8-Stellung gebunden ist.

Beispiele für Kupplungskomponenten der Aminohydroxynaphthalinreihe in der Bedeutung von K¹ und K² sind folgende:

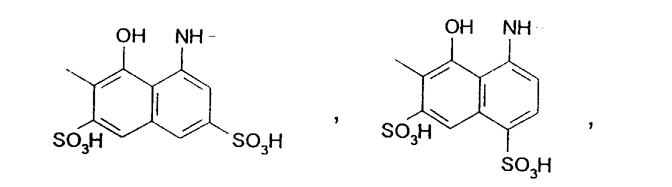

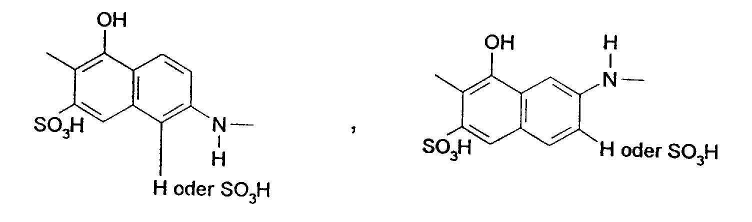

Im Rahmen der Formel (1) sind Farbstoffe bevorzugt, die mindestens eines der folgenden Merkmale 1-5 aufweisen:
1. D¹ = D²
2. K¹ = K²
3. B = direkte Bindung
4. X = CH=CH₂ oder CH₂CH₂OSO₃H
5. y =

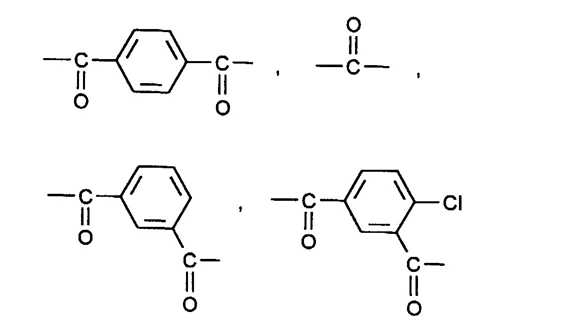

Besonders bevorzugt sind weiterhin Farbstoffe, in denen K¹ und K² für den Rest einer Kupplungskomponente der Aminohydroxynaphthalinreihe stehen, insbesondere für 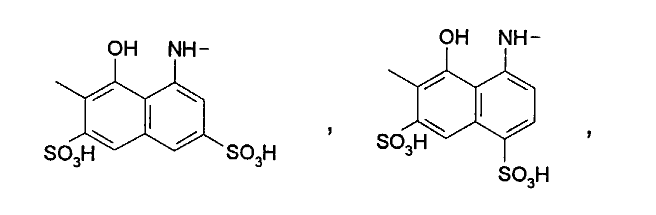 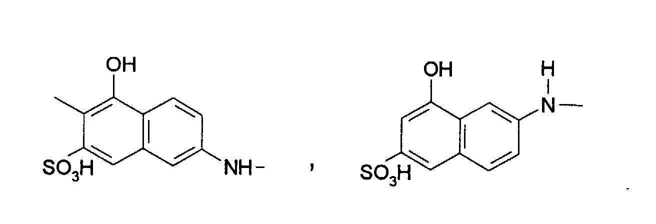 und solche in denen D¹ = D² und für 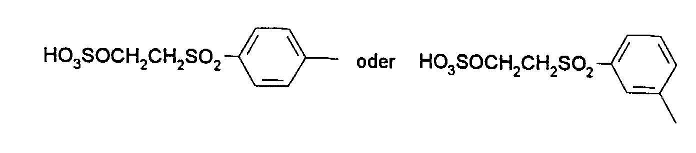 steht.

Gegenstand der Erfindung sind weiterhin Verfahren zur Herstellung von Farbstoffen der Formel (1), bei dem Diazokomponenten der Formeln

D¹-NH₂ (2a)

und

D²-NH₂ (2b),

worin D¹ und D² die angegebene Bedeutung haben,
diazotiert und mit Kupplungskomponenten der Formel

H-K¹-Y-K²-H (3)

worin K¹, K² und Y die angebene Bedeutung haben, gekuppelt werden.

Ein weiteres Verfahren besteht darin Aminoazofarbstoffe der Formeln

D¹-N=N-K¹-H (4a)

und

D²-N=N-K²-H (4b)

worin D¹, D², K¹ und K² die angegebene Bedeutung haben, mit einer bifunktionellen Acylverbindung der Formel

Cl-Y-Cl (5)

worin Y die angegebene Bedeutung hat, zu kondensieren.

Dabei entsprechen die Reaktionsbedingungen den auf dem Gebiet der Acylierung, Diazotierung und Kupplung üblichen Bedingungen. So erfolgt die Herstellung der Farbstoffe vorzugsweise im wäßrigen Medium.

Im nachfolgenden sind Beispiele von Verbindungen der Formeln 2a, 2b, 3, 4a, 4b und 5 aufgeführt:

Bevorzugte Verbindungen 2a und 2b:

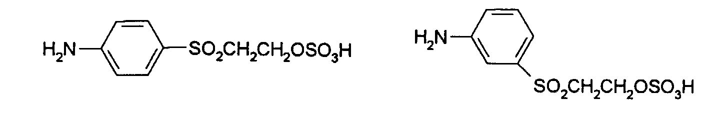

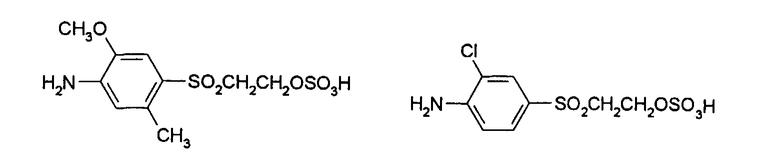

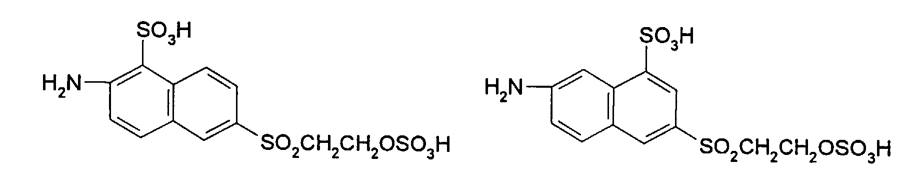

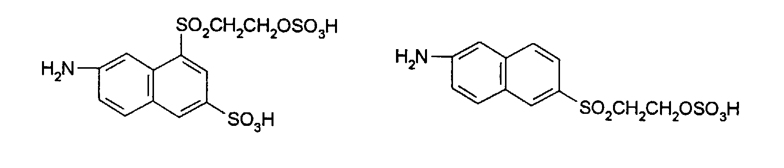

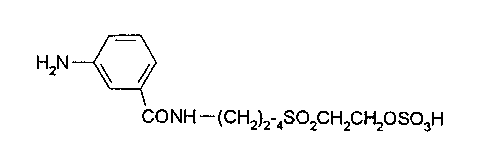

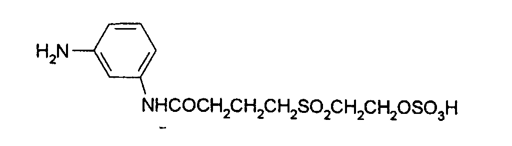

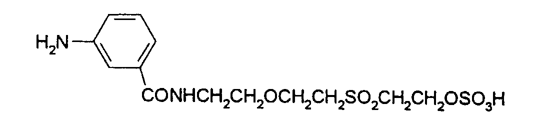

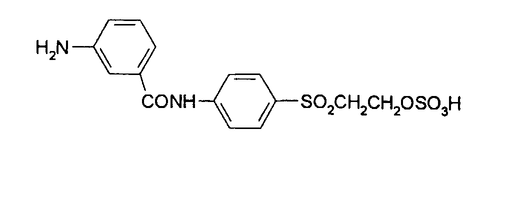

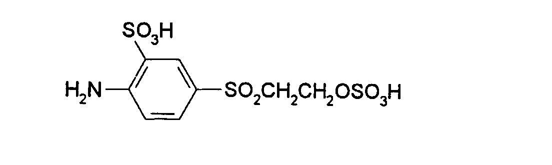

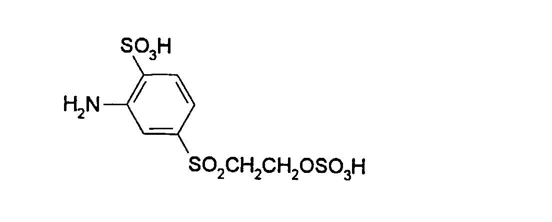

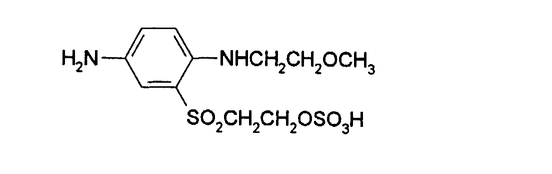

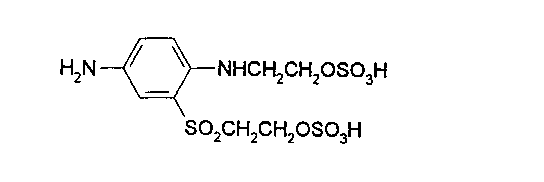

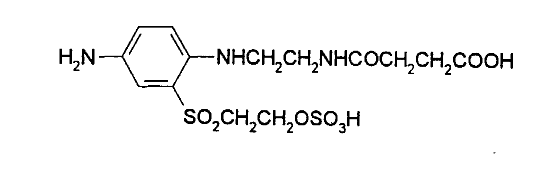

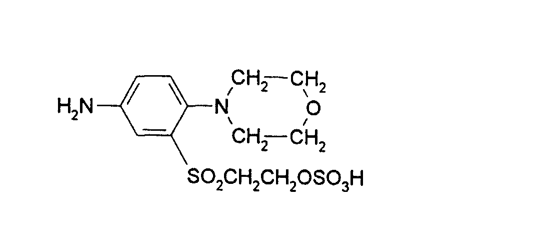

Bevorzugte Verbindungen 3:

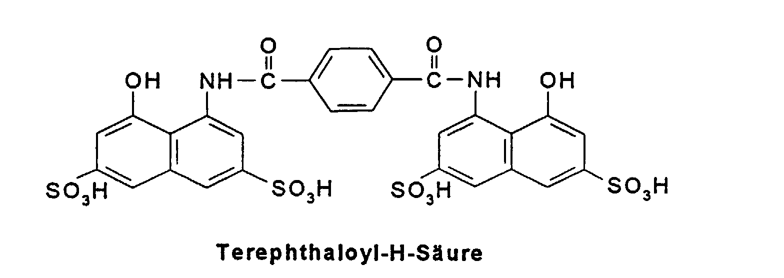

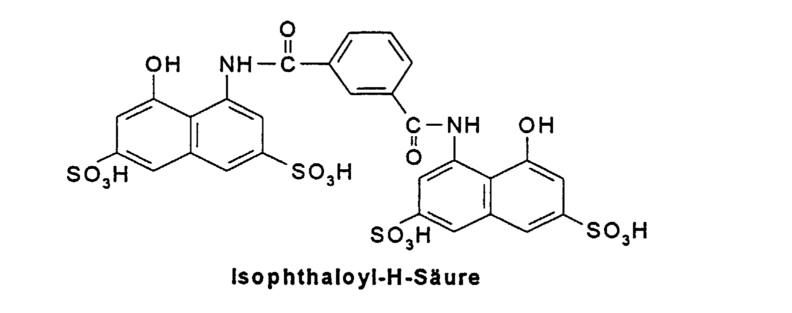

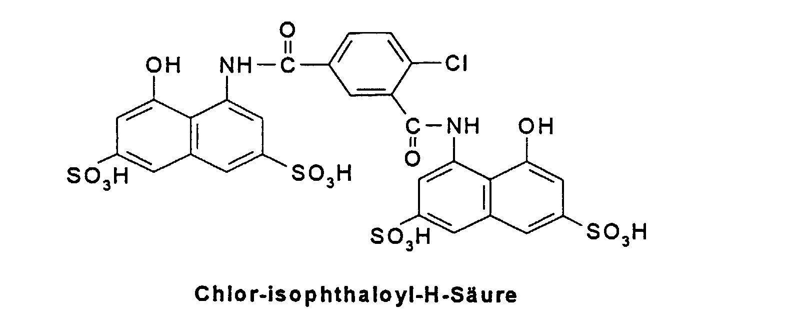

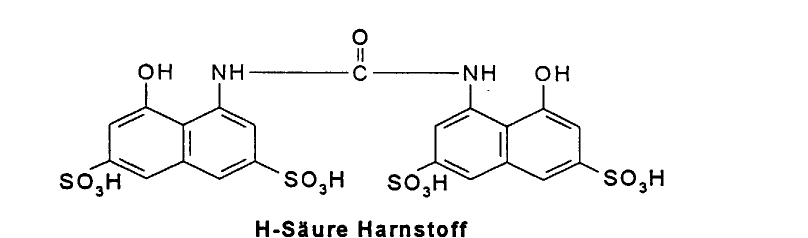

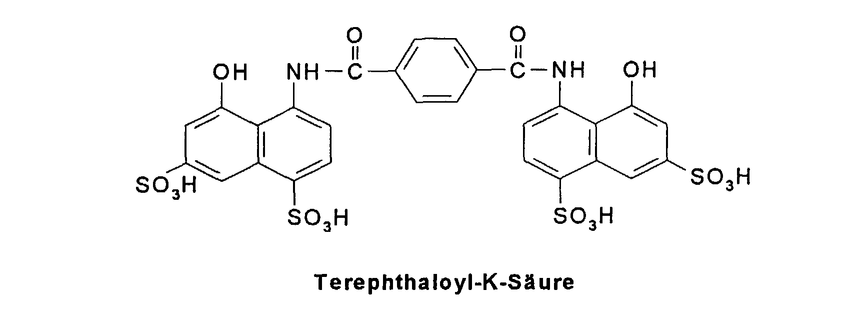

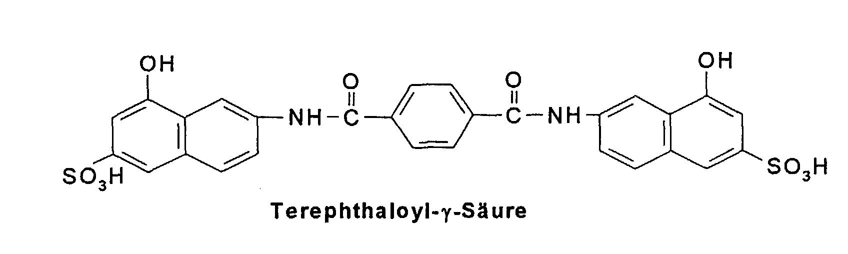

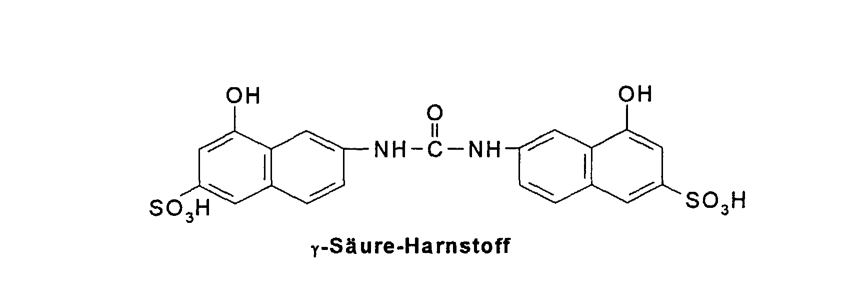

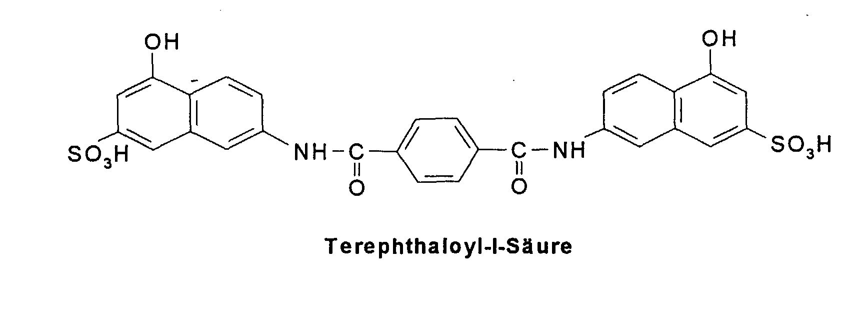

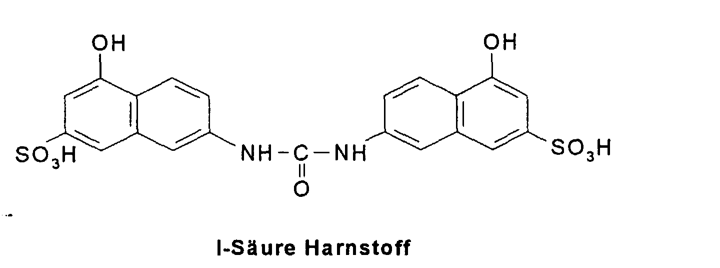

### Bevorzugte Verbindungen 4a und 4b:

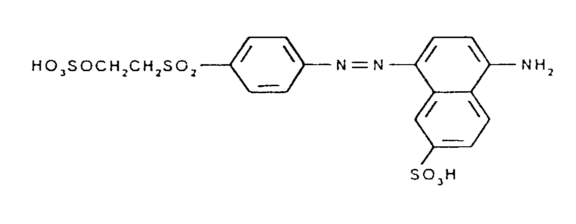

Bevorzugte Verbindungen 5:
COCl₂,

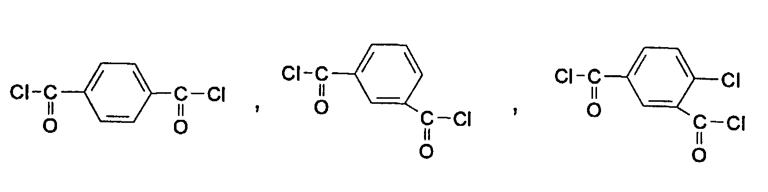

Die Isolierung der nach den vorstehend beschriebenen Verfahren erhaltenen Reaktivfarbstoffe erfolgt in üblicher Weise durch Aussalzen, beispielsweise mit Natrium- oder Kaliumchlorid, oder durch Eindampfen der neutralen wäßrigen Farbstofflösung, vorzugsweise bei mäßig erhöhter Temperatur und vermindertem Druck oder durch Sprühtrocknung. Die Farbstoffe können als Feststofformierungen wie auch als konzentrierte Lösungen eingesetzt werden.

In einer bevorzugten Ausführungsform werden die erfindungsgemäßen Farbstoffe als Granulat verwendet. Die Granulate der erfindungsgemäßen Farbstoffe können beispielsweise in folgenden Schritten erhalten werden:

### Mischgranulierung

Dabei wird das Farbstoffpulver mit 15 bis 55 % Wasser - bezogen auf das Gewicht des Pulvers - befeuchtet, anschließend in einem Mischgranulator das Granulat unter trocknenden Bedingungen gebildet und gegebenenfalls entstaubt, wobei das Entstaubungsmittel vorzugsweise als Aerosolgemisch auf das Granulat gesprüht wird.

### Sprühgranulierung

Dabei wird die Synthese-Lösung oder -Suspension in einem fluidisierenden Sprühtrockner gleichzeitig getrocknet und granuliert.

Die Erfindung betrifft weiterhin feste Farbstoffpräparationen, insbesondere Farbstoffpulver oder Farbstoffgranulate, die 30 - 95 Gew.-% eines Reaktivfarbstoffes der Formel (I), 5 - 15 Gew.-% Wasser (Restfeuchte), enthalten, jeweils bezogen auf die Präparation. Daneben können sie noch weitere Zusätze wie anorganische Salze wie Alkalichloride oder Alkalisulfate, Dispergiermittel, Netzmittel, Entstaubungsmittel sowie weitere übliche Stellmittel enthalten.

Bevorzugte Feststoffpräparationen enthalten zusätzlich Puffersubstanzen, die beim Auflösen in der 20-fachen Menge Wasser (bezogen auf das Gewicht der Feststoffpräparation) einen pH-Wert von 3,5 bis 7,5, insbesondere 4,5 bis 6,5, ergeben. Diese Puffersubstanzen werden vorzugsweise in Mengen von 3 bis 50, insbesondere 5 bis 15 Gew.-%, bezogen auf das Gesamtgewicht, zugesetzt.

Wäßrige Reaktivfarbstofflösungen enthalten im allgemeinen 5 bis 50 Gew.-% eines Farbstoffes der Formel (I) (bezogen auf das Gesamtgewicht der Lösung).

Bevorzugte wäßrige Reaktivfarbstofflösungen enthalten zusätzlich Puffersubstanzen und weisen einen pH-Wert von 3,5 bis 7,5, insbesondere 4,5 bis 6,5, auf.

Diese Puffersubstanzen werden vorzugsweise in Mengen von 0,1 bis 50, insbesondere 1 bis 20 Gew.-%, bezogen auf das Gesamtgemisch, zugesetzt.

Die verwendeten Puffer sind inert gegenüber den Reaktivgruppen. Beispiele für Puffer sind: Natriumdihydrogenphosphat, Natriumacetat, Kaliumacetat, Natriumborat, Kaliumborat, Natriumoxalat, Kaliumoxalat und Natriumhydrogenphthalat. Diese Puffer können für sich allein oder in Mischung verwendet werden.

Die erfindungsgemäßen Reaktivfarbstoffe der Formel (I) besitzen wertvolle Farbstoffeigenschaften. Infolge der faserreaktiven Gruppe SO₂X weisen sie faserreaktive Eigenschaften auf.

Die erfindungsgemäßen Reaktivfarbstoffe der Formel (I) ergeben Färbungen mit guten Naß- und Lichtechtheiten. Besonders hervorzuheben ist es, daß die Farbstoffe eine gute Löslichkeit und Elektrolytlöslichkeit bei guten Auszieheigenschaften und hoher Farbstoff-Fixierung aufweisen, und daß sich die nicht fixierten Anteile leicht entfernen lassen.

Die erfindungsgemäßen Reaktivfarbstoffe der Formel (I) eignen sich zum Färben und Bedrucken von Hydroxyl- oder Amidgruppen enthaltenden Materialien, wie Textilfasern, Fäden und Geweben aus Wolle, Seide, synthetischen Polyamid- und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzewirkung nach den für Reaktivfarbstoffe bekannt gewordenen Verfahren erfolgt.

Die angegebenen Formeln sind die der entsprechenden freien Säuren. Die Farbstoffe werden im allgemeinen in Form der Alkalisalze, insbesondere der Na-Salze isoliert und zum Färben eingesetzt.

### Experimenteller Teil

### Beispiel 1

a) Diazotierung
   28,1 g 4-(β-Sulfatoethylsulfonyl)-anilin werden in 400 ml Wasser bei pH 5 - 6 gelöst. Man gibt dann 28 ml 30 %ige Salzsäure zu und läßt anschließend 70 ml 10 %ige Natriumnitritlösung zutropfen. Man rührt 1 Stunde nach und entfernt den Überschuß an Nitrit mit Amidosulfonsäure.
b) Kupplung
   38,4 g Terephthaloyl-H-Säure werden in 1200 ml Wasser bei 80°C gelöst. Diese Lösung läßt man in die Diazotierung einlaufen, wobei man durch Einstreuen von Natriumhydrogencarbonat einen pH zwischen 4,5 und 5,5 einhält und die Temperatur durch Kühlung von außen nicht über 25°C ansteigen läßt. Die Kupplung ist rasch beendet. Aus der klaren Lösung kann der Farbstoff durch Aussalzen mit Kaliumchlorid abgeschieden werden. Nach dem Absaugen, Trocknen bei 70°C im Umlufttrockenschrank erhält man ein rotes Farbstoffpulver, das sich leicht in Wasser mit roter Farbe löst. Alternativ kann man den Farbstoff durch Sprühtrocknen der durch Druckpermeation aufkonzentrierten Reaktionslösung isolieren.
   In Form der freien Säure entspricht der Farbstoff nachfolgender Formel 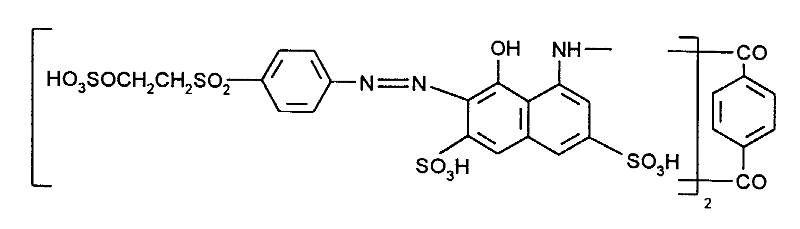
   Nach einem der für Vinylsulfonfarbstoffe üblichen Färbeverfahren erhält man damit auf Baumwolle kräftige rote Färbungen mit guten Allgemeinechtheiten (λₘₐₓ = 500 nm).

### Beispiel 2

a) Diazotierung
Wie bei Beispiel 1
b) Kupplung
38,4 g Terephthaloyl-H-Säure werden in 500 ml Wasser angerührt. Man setzt dann die nach a) erhaltene Suspension der Diazotierung zu und rührt solange bei pH 5 - 6 bis sich keine Diazoverbindung mehr nachweisen läßt. Die weitere Aufarbeitung kann nach den Angaben von Beispiel 1 erfolgen.
Der Farbstoff ist identisch mit dem nach Beispiel 1 erhaltenen. Weitere wertvolle Farbstoffe erhält man nach den Angaben von Beispiel 1 oder 2, wenn man die in Spalte 2 aufgeführten Diazokomponenten und die Spalte 3 genannten Kupplungskomponenten verwendet. In der letzten Spalte sind die damit auf Baumwolle erhältlichen Farbtöne aufgeführt.

| **Beispiel** | **Diazokomponente** | **Kupplungskomponente** | **Farbton auf BW** |
|---|---|---|---|
| 3 | 3-[β-Sulfatoethylsulfonyl]-anilin | Terephthaloyl-H-Säure | rot λₘₐₓ = 504 nm |
| 4 | 4-[β-Sulfatoethylsulfonyl]-2-methoxy-5-methyl-anilin | Terephthaloyl-H-Säure | blaustichig rot λₘₐₓ = 535 nm |
| 5 | 4-[β-Sulfatoethylsulfonyl]-2-chlor-anilin | Terephthaloyl-H-Säure | rot λₘₐₓ = 498 nm |
| 6 | 6-[β-Sulfatoethylsulfonyl]-1-sulfo-2-amino-naphthalin | Terephthaloyl-H-Säure | blaustichig rot λₘₐₓ = 525 nm |
| 7 | 6-[β-Sulfatoethylsulfonyl]-8-sulfo-2-amino-naphthalin | Terephthaloyl-H-Säure | blaustichig rot λₘₐₓ = 530 nm |
| 8 | 4-[β-Sulfatoethylsulfonyl]-anilin-2-sulfonsäure | Terephthaloyl-H-Säure | rot λₘₐₓ = 490 nm |
| 9 | 4-[β-Sulfatoethylsulfonyl]-anilin | Terephthaloyl-K-Säure | gelbstichig rot |
| 10 | 3-[β-Sulfatoethylsulfonyl]-anilin | Terephthaloyl-K-Säure | gelbstichig rot |
| 11 | 6-[β-Sulfatoethylsulfonyl]-1-sulfo-2-amino-naphthalin | Terephthaloyl-K-Säure | blaustichig rot |
| 12 | 4-[β-Sulfatoethylsulfonyl]-2-chlor-anilin | Terephthaloyl-K-Säure | blaustichig rot |
| 13 | 4-[β-Sulfatoethylsulfonyl]-anilin-2-sulfonsäure | Terephthaloyl-K-Säure | gelbstichig rot |
| 14 | 6-[β-Sulfatoethylsulfonyl]-2-amino-naphthalin | Terephthaloyl-K-Säure | blaustichig rot |
| 15 | 4-[β-Sulfatoethylsulfonyl]-anilin | Isophthaloyl-H-Säure | rot λₘₐₓ = = 518 nm |
| 16 | 4-[β-Sulfatoethylsulfonyl]-anilin | Chlor-isophthaloyl-H-Säure | rot |
| 17 | 4-[β-Sulfatoethylsulfonyl]-anilin | H-Säure Harnstoff | rot |
| 18 | 4-[β-Sulfatoethylsulfonyl]-anilin | Isophthaloyl-H-Säure | gelbstichig rot |
| 19 | 4-[β-Sulfatoethylsulfonyl]-anilin | Chlor-isophtaloyl-H-Säure | gelbstichig rot |
| 20 | 4-[β-Sulfatoethylsulfonyl]-anilin | K-Säure Harnstoff | gelbstichig rot |
| 21 | 4-[β-Sulfatoethylsulfonyl]-anilin | I-Säure Harnstoff | orange |
| 22 | 4-[β-Sulfatoethylsulfonyl]-anilin | γ-Säure Harnstoff | scharlach |
| 23 | 4-[β-Sulfatoethylsulfonyl]-anilin | Terephthaloyl-I-Säure | orange |
| 24 | 4-[β-Sulfatoethylsulfonyl]-anilin | Terephthaloyl-γ-Säure | scharlach |
| 25 | 4-[β-Sulfatoethylsulfonyl]-anilin-2-sulfonsäure | Terephthaloyl-γ-Säure | scharlach |
| 26 | 6-[β-Sulfatoethylsulfonyl]-2-amino-1-sulfo-naphthalin | I-Säure Harnstoff | rotstichig orange |
| 27 | 4-[β-Sulfatoethylsulfonyl]-2-methoxy-5-methyl-anilin | 1-Säure Harnstoff | scharlach |

### Beispiel 28

a) Diazotierung
   28,1g 4-(β-Sulfatoethylsulfonyl)-anilin werden in 400 ml Wasser bei pH 5 - 6 gelöst. Man gibt dann 28 ml 30 %ige Salzsäure zu und läßt anschließend 70 ml 10 %ige Natriumnitritlösung zutropfen. Man rührt 1 Stunde nach und entfernt den Überschuß an Nitrit mit Amidosulfonsäure.
b) Kupplung
   27,9g 7,7'-(Fumaroyldiimino)bis[1-hydroxy-naphthalin-3-sulfonsäure] werden in 300 ml Wasser verrührt. Man gibt dannn bei pH 5 - 6 die Diazotierung zu. Die Kupplung ist rasch beendet. Der Farbstoff kann durch Aussalzen mit Kaliumchlorid isoliert werden. Nach dem Trockenen bei 70°C im Umluft-trockenschrank und Mahlen erhält man ein rotes Farbstoffpulver, das sich leicht in Wasser mit roter Farbe löst. Alternativ kann man den Farbstoff durch Sprühtrocknen der Reaktionslösung isolieren.

In Form der freien Säure entspricht der Farbstoff der Formel

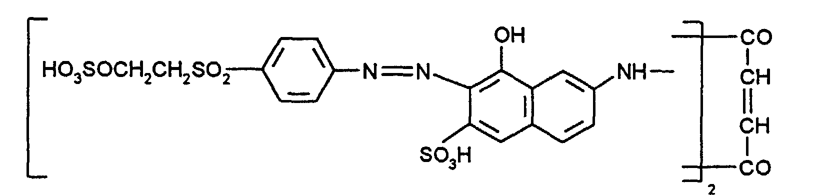

Er färbt Baumwolle gelbstichig rot. Weitere wertvolle Farbstoffe, die Baumwolle gleichfalls gelbstichig rot färben, erhält man nach den Angaben dieses Beispiels, wenn man als Kupplungskomponente anstelle der über Fumarsäure verdoppelten 1-Hydroxy-7-amino-naphthalin-3-sulfonsäure (γ-Säure) die über folgende bifunktionelle Säurechloride verdoppelte γ-Säure emsetzt:
- Bernsteinsäuredichlorid
- Glutarsäuredichlorid
- Adipinsäuredichlorid
- Oxalsäuredichlorid

### Beispiel 29

a) Diazotierung
   28,1g 4-(β-Sulfatoethylsulfonyl)-anilin werden in 400 ml Wasser bei pH 5 - 6 gelöst. Man gibt dann 28 ml 30 %ige Salzsäure zu und läßt anschließend 70 ml 10 %ige Natriumnitritlösung zutropfen. Man rührt 1 Stunde nach und entfernt den Überschuß an Nitrit mit Amidosulfonsäure.
b) Diazotierung
   36,1g 4-(β-Sulfatoethylsulfonyl)anilin-2-sulfonsäure werden in 500 ml Eiswasser verrührt und mit 28 ml 30 %iger Salzsäure versetzt. Man gibt dann tropfenweise 70 ml 10 %ige Natriumnitritlösung zu und rührt solange bis nur noch ein geringer Nitritüberschuß zu erkennen ist. Dieser wird dann mit Amidosulfonsäure zerstört.
c) Kupplung
   Die nach a) und b) erhaltenen Diazotierungen werden gemischt. In diese Vorlage läßt man eine 80 - 90°C warme Lösung von 76,8g Terephthaloyl-H-Säure in Wasser einlaufen, wobei man durch Kühlung von außen die Temperatur nicht über 25°C ansteigen läßt. Durch Einstreuen von Natriumhydrogencarbonat wird der pH bei 5 - 6 gehalten.

Die Kupplung ist rasch beendet. Aus der klaren Lösung kann der Farbstoff durch Aussalzen mit Kaliumchlorid abgeschieden werden. Nach dem Absaugen, Trocknen bei 70°C im Umlufttrockenschrank erhält man ein rotes Farbstoffpulver, das sich leicht in Wasser mit roter Farbe löst. Alternativ kann man den Farbstoff durch Sprühtrocknen der durch Druckpermeation aufkonzentrierten Reaktionslösung isolieren.

Man erhält dabei ein Gemisch von Farbstoffen. Neben den beiden Farbstoffen mit gleicher Diazokomponente erhält man den mit zwei verschiedenen Diazokomponenten. In Form der freien Säure entspricht dieser Farbstoff nachfolgender Formel

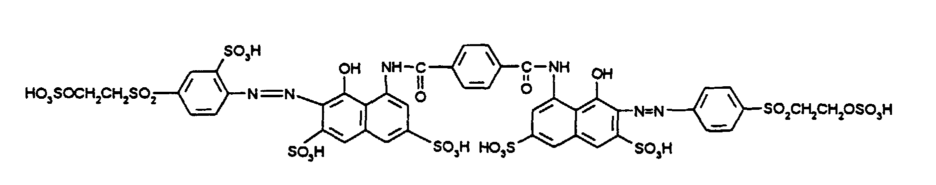

Nach einem der Vinylsulfonfarbstoffe üblichen Färbeverfahren erhält man damit auf Baumwolle kräftige rote Färbungen mit guten Allgemeinechtheiten.

Weitere wertvolle Farbstoffe erhält man nach den Angaben dieses Beispiels, wenn man anstelle von Terephthaloyl-H-Säure die nachfolgend aufgeführten Kupplungskomponenten verwendet. Die Farbtöne auf Baumwolle sind in der letzten Spalte folgender Tabelle angegeben.

| **Beispiel** | **Kupplungskomponente** | **Farbton auf BW** |
|---|---|---|
| 30 | Terephthaloyl-K-Säure | gelbstichig rot |
| 31 | Terephthaloyl-I-Säure | orange |
| 32 | Terephthaloyl-γ-Säure | scharlach |
| 33 | I-Säure Harnstoff | orange |
| 34 | γ-Säure Harnstoff | scharlach |
| 35 | Fumaroyl-γ-Säure | scharlach |
| 36 | 8,8'-(Oxaloyldiimino)-bis[1-hydroxy-naphthalin-3,6-disulfonsäure] | rot |
| 37 | 8,8'-(Oxaloyldiimino)-bis[1-hydroxy-naphthalin-3,5-disulfonsäure] | gelbstichig rot |
| 38 | 6,6'-(Oxaloyldiimino)-bis[1-hydroxy-naphthalin-3 -sulfonsäure] | orange |
| 39 | 6,6'-(Glutaroyldiimino)-bis[1-hydroxy-naphthalin-3-sulfonsäure] | orange |
| 40 | 7,7'-(Glutaroyldiimino)-bis[1-hydroxy-naphthalin-3-sulfonsäure] | scharlach |

## Patentansprüche

1. Azoreaktivfarbstoff der Formel
D¹-N=N-K¹-Y-K²-N=N-D² (1)
worin
Y für einen bifunktionellen Acylrest der aliphatischen oder aromatischen Reihe steht,
K¹ und K² gleich oder verschieden sind und für den Rest einer Kupplungskomponente der Aminonaphthalin- oder der Aminohydroxynaphthalin- Reihe stehen;
D¹ und D² gleich oder verschieden sind und für den Rest einer Diazokomponente der Formel
X SO₂-B-D- (2)
stehen
worin
D einen gegebenenfalls substituierten Benzol- oder Naphthalinkern bedeutet,
B für eine direkte Bindung oder ein zweiwertiges Brückenglied und
X für CH = CH₂ oder CH₂CH₂Z steht, wobei
Z einen unter alkalischen Bedingungen abspaltbaren Substituenten bedeutet.

2. Azoreaktivfarbstoff gemäß Anspruch 1, worin Y für 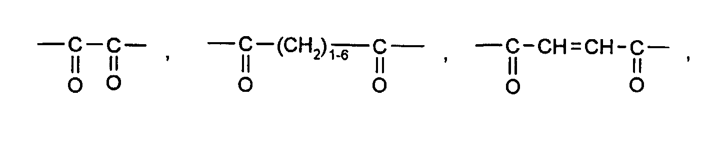 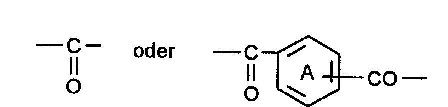 steht, worin die beiden Carbonylgruppen des Benzolringes A in o-, m- oder p- Stellung zueinander stehen und der Benzolring A durch Cl, CH₃ oder OCH₃ substituiert sein kann.

3. Azoreaktivfarbstoff nach wenigstens einem der vorhergehenden Ansprüche, dadurch gekennzeichnet, daß D substituiert ist mit
C₁-C₄-Alkyl, gegebenenfalls substituiertes C₁-C₄-Alkoxy, gegebenenfalls substituiertes NH₂, COOH, SO₃H, OH, Halogen, SCH₂CH₂OH, SCH₂COOH.

4. Azoreaktivfarbstoff nach wenigstens einem der vorhergehenden Ansprüche, dadurch gekennzeichnet, daß B eine der folgenden Bedeutungen hat 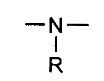
-CH₂-, 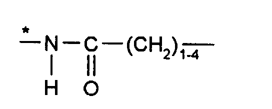 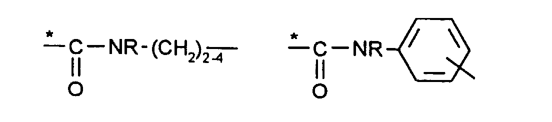 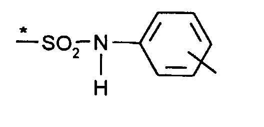
wobei die mit einem Stern gekennzeichnete Bindung an den Rest D geknüpft ist und
R für H oder C₁-C₄-Alkyl, insbesondere CH₃ und C₂H₅ steht.

5. Azoreaktivfarbstoff nach wenigstens einem der vorhergehenden Ansprüche, dadurch gekennzeichnet, daß Z für eine der folgenden Bedeutungen steht:
OSO₃H, S₂O₃H, OPO₃H₂, Cl, OCOCH₃, OSO₂CH₃.

6. Azoreaktivfarbstoff nach wenigstens einem der vorhergehenden Ansprüche, dadurch gekennzeichnet, daß die Kupplungskomponenten K¹ und K² wenigstens eine der folgenden Bedeutungen haben 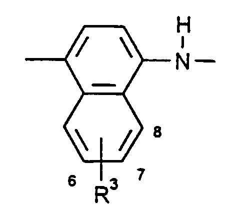 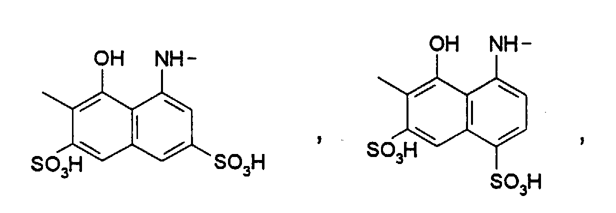 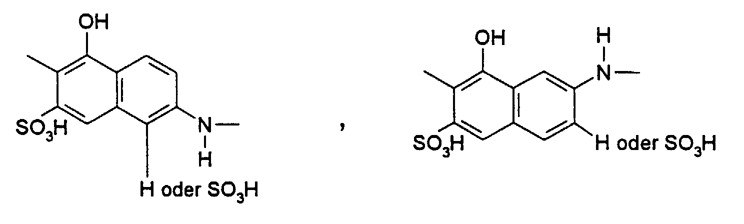 worin
R³ H oder SO₃H bedeutet.

7. Azoreaktivfarbstoff nach wenigstens einem der vorhergehenden Ansprüche, dadurch gekennzeichnet, daß er wenigstens einen der folgenden Merkmale aufweist:
1. D¹ = D²
2. K¹ = K²
3. B = direkte Bindung
4. X = CH=CH₂ oder CH₂CH₂OSO₃H
5.

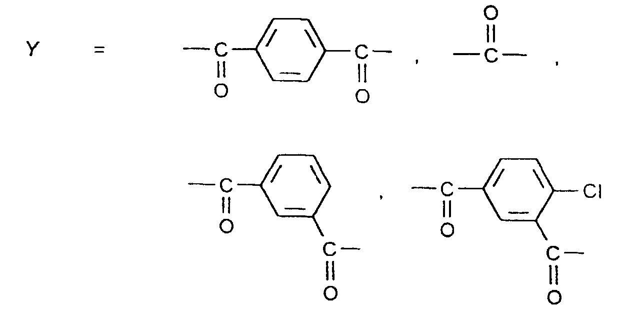

8. Verfahren zur Herstellung eines Farbstoffes gemäß Anspruch 1, dadurch gekennzeichnet, daß man die Azokomponenten der Formeln D¹-NH₂ und D²-NH₂ diazotiert und mit einer Kupplungskomponente der Formel H-K¹-Y-K²-H kuppelt oder indem man Aminoazofarbstoffe der Formeln D¹-N=NK¹-H und D²-N=NK²-H mit einer bifunktionellen Acylverbindung der Formel 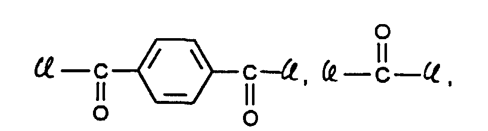 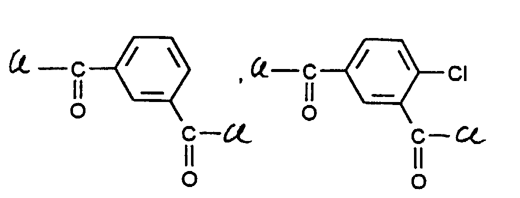 kondensiert, worin die Substituenten die in Anspruch 1 angegebene Bedeutung haben.

9. Feste Farbstoffpräparation, enthaltend wenigstens einen Reaktivfarbstoff, dadurch gekennzeichnet, daß 30 bis 95 Gew.-% eines Reaktivfarbstoffes gemäß Anspruch 1, und 5 bis 15 Gew.-% Wasser enthalten sind.

10. Verfahren zum Färben oder Bedrucken von Hydroxyl- oder Amidgruppen enthaltenden Materialien mit einem Reaktivfarbstoff, dadurch gekennzeichnet, daß ein Reaktivfarbstoff gemäß Anspruch 1 verwendet wird.

## Claims

1. Azo reactive dyestuff of the formula
D¹-N=N-K¹-Y-K²-N=N-D² (1)
in which
Y is a bifunctional acyl radical from the aliphatic or aromatic series,
K¹ and K² are identical or different and are the radical of a coupling component from the aminonaphthalene or aminohydroxynaphthalene series,
D¹ and D² are identical or different and are the radical of a diazo component of the formula
X-SO₂-B-D- (2)
in which
D is a substituted or unsubstituted benzene or naphthalene ring,
B is a direct bond or a divalent bridging member, and
X is CH=CH₂ or CH₂CH₂Z where
Z is a substituent which can be eliminated under alkaline conditions.

2. Azo reactive dyestuff according to Claim 1, in which Y is 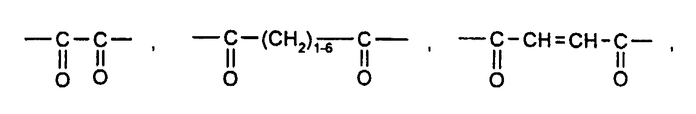 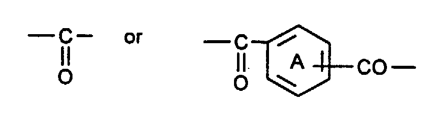 in which the two carbonyl groups of the benzene ring A are in the o, m or p positions relative to one another and benzene ring A can be substituted by Cl, CH₃ or OCH₃.

3. Azo reactive dyestuff as according to at least one of the preceding claims, characterized in that D is substituted by C₁-C₄-alkyl, substituted or unsubstituted C₁-C₄-alkoxy, substituted or unsubstituted NH₂, COOH, SO₃H, OH, halogen, SCH₂CH₂OH, SCH₂COOH.

4. Azo reactive dyestuff according to at least one of the preceding claims, characterized in that B has one of the following meanings 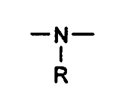
-CH₂- , 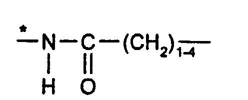 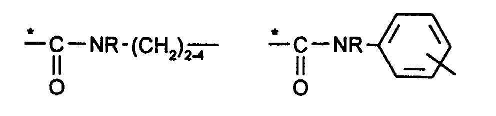 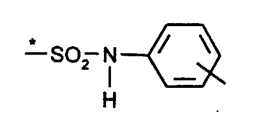
the bond marked with an asterisk being linked to the radical D and
R being H or C₁-C₄-alkyl, in particular CH₃ and C₂H₅.

5. Azo reactive dyestuff according to at least one of the preceding claims, characterized in that Z has one of the following meanings:
OSO₃H, S₂O₃H, OPO₃H₂, Cl, OCOCH₃, OSO₂CH₃.

6. Azo reactive dyestuff according to at least one of the preceding claims, characterized in that the coupling components K¹ and K² have at least one of the following meanings 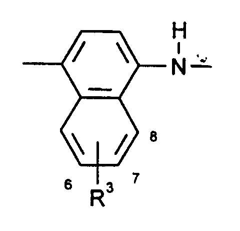 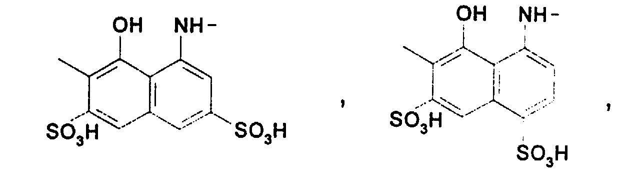 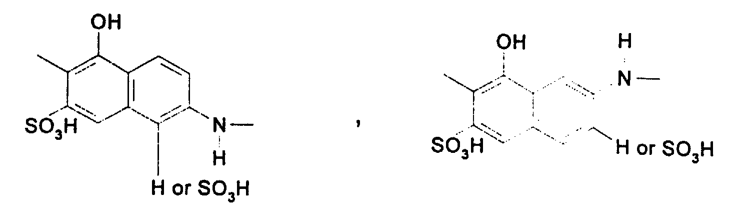 in which
R³ is H or SO₃H.

7. Azo reactive dyestuff according to at least one of the preceding claims, characterized in that it has at least one of the following features:
1. D¹ = D²
2. K¹ = K²
3. B = direct bond
4. X = CH=CH₂ or CH₂CH₂OSO₃H
5.

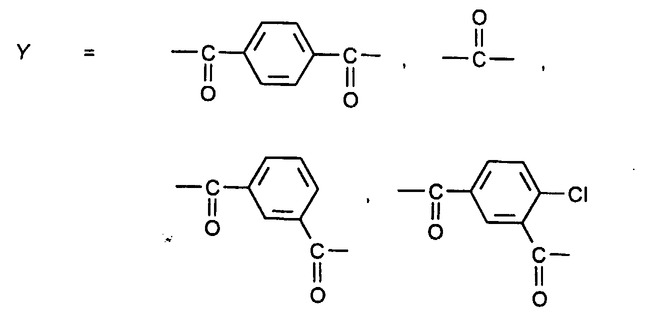

8. Process for preparing a dyestuff according to Claim 1, characterized in that the azo components of the formulae D¹-NH₂ and D²-NH₂ are diazotized and the resulting diazonium salt solutions are coupled onto a coupling component of the formula H-K¹-Y-K²-H or the aminoazo dyestuffs of the formulae D¹-N=NK¹-H and D²-N=NK²-H are condensed with a bifunctional acyl compound of the formula 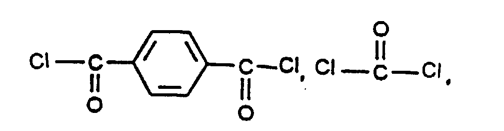 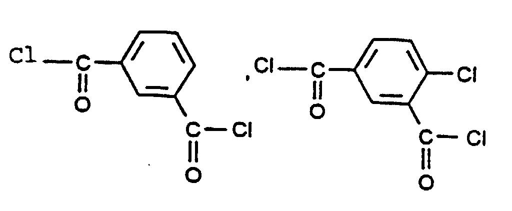 in which the substituents have the meaning given in Claim 1.

9. Solid dyestuff preparation containing at least one reactive dyestuff, characterized in that said preparation comprises 30 to 95% by weight of a reactive dyestuff according to Claim 1 and 5 to 15% by weight of water.

10. Process for dyeing or printing hydroxyl- or amido-containing materials with a reactive dyestuff, characterized in that a reactive dyestuff according to Claim 1 is used.

## Revendications

1. Colorant réactif azoïque de formule
D¹-N=N-K¹-Y-K²-N=N-D² (1)
dans laquelle
Y représente un radical acyle bifonctionnel de la série aliphatique ou aromatique,
K¹ et K², ayant des significations identiques ou différentes, représentent chacun le radical d'un copulant de la série aminonaphtalénique ou de la série aminohydroxynaphtalénique ;
D¹ et D², ayant des significations identiques ou différentes, représentent chacun le radical d'un composant diazotable de formule
X SO₂-B-D- (2)
dans laquelle
D représente un noyau benzénique ou naphtalénique éventuellement substitué,
B représente une liaison directe ou un pont divalent et
X représente CH=CH₂ ou CH₂CH₂Z,
Z représentant un substituant scindable en milieu alcalin.

2. Colorant réactif azoïque selon la revendication 1, pour lequel Y représente 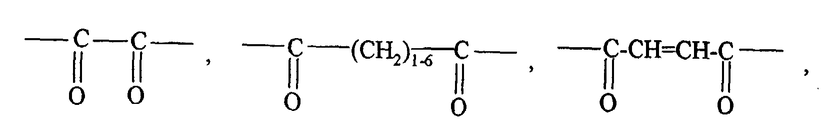 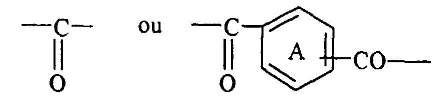 dans lesquels les deux groupes carbonyle du cycle benzénique A sont en position mutuelle o, m ou p et le cycle benzénique A peut porter des substituants Cl, CH₃ ou OCH₃.

3. Colorant réactif azoïque selon au moins une des revendications qui précèdent, caractérisé en ce que D porte des substituants
alkyle en C₁-C₄, alcoxy en C₁-C₄ éventuellement substitué, NH₂ éventuellement substitué, COOH, SO₃H, OH, halogéno, SCH₂CH₂OH, SCH₂COOH.

4. Colorant réactif azoïque selon au moins une des revendications qui précèdent, caractérisé en ce que B représente l'un des groupes suivants : 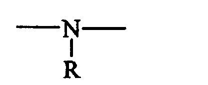
―CH₂― , 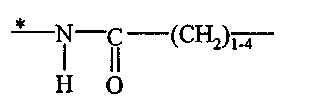 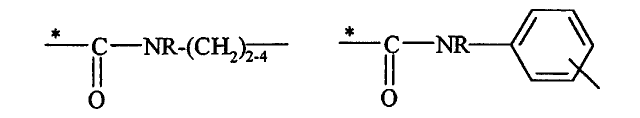 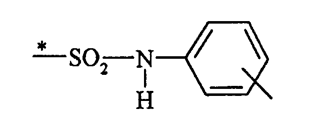
dans lesquels la liaison signalée par un astérisque relie au groupe D et R représente H ou un groupe alkyle en C₁-C₄, plus spécialement CH₃ ou C₂H₅.

5. Colorant réactif azoïque selon au moins une des revendications qui précèdent, caractérisé en ce que Z a l'une des significations suivantes :
OSO₃H, S₂O₃H, OPO₃H₂, Cl, OCOCH₃, OSO₂CH₃.

6. Colorant réactif azoïque selon au moins une des revendications qui précèdent, caractérisé en ce que les copulants K¹ et K² consistent en au moins un des suivants : 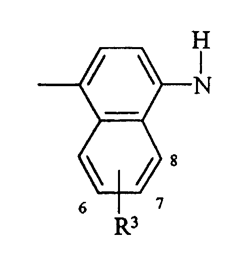 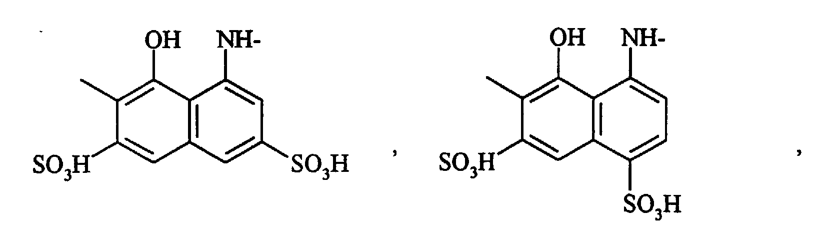 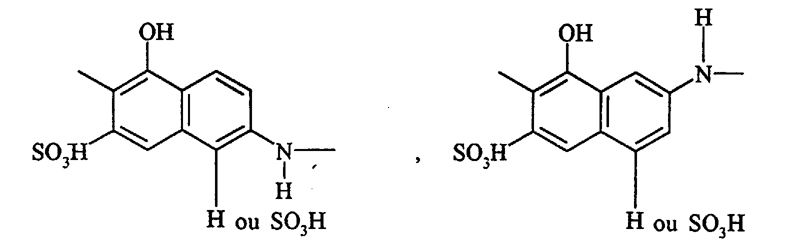 dans lesquels
R³ représente H ou SO₃H.

7. Colorant réactif azoïque selon au moins une des revendications qui précèdent, caractérisé en ce qu'il présente au moins une des caractéristiques suivantes :
1. D¹ = D²
2. K¹ = K²
3. B = liaison directe
4. X = CH=CH₂ ou CH₂CH₂OSO₃H
5.

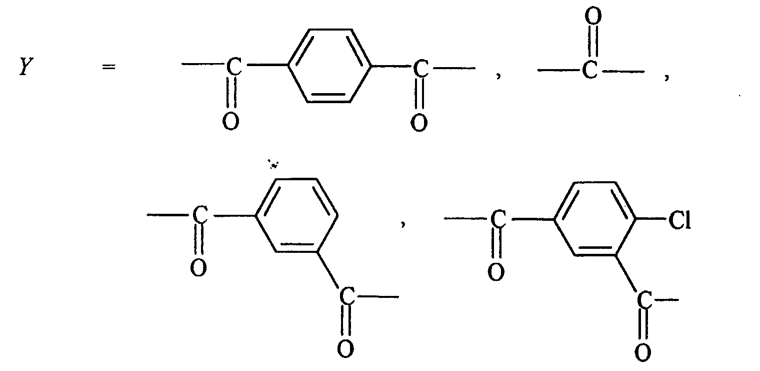

8. Procédé pour préparer un colorant selon revendication 1, caractérisé en ce que l'on diazote les composants azoïques de formules D¹-NH₂ et D²-NH₂ et on copule avec un copulant de formule H-K¹-Y-K²-H ou bien on condense des colorants aminoazoïques de formules D¹-N=NK¹-H et D²-N=NK²-H avec un composé acylique bifonctionnel de formule 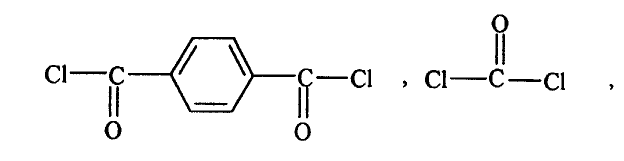 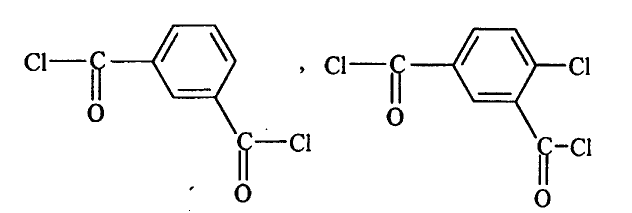 dans lesquelles les symboles ont les significations indiquées dans la revendication 1.

9. Composition de colorant solide contenant au moins un colorant réactif, caractérisée en ce qu'elle contient de 30 à 95 % en poids d'un colorant réactif selon revendication 1 et de 5 à 15 % en poids d'eau.

10. Procédé pour la teinture ou l'impression de matières contenant des groupes hydroxy ou amide à l'aide d'un colorant réactif, caractérisé en ce que l'on utilise un colorant réactif selon revendication 1.
